# EUROPÄISCHE PATENTSCHRIFT

(11) **EP 2 278 235 B1**
(45) Veröffentlichungstag und Bekanntmachung des Hinweises auf die Patenterteilung: **07.10.2015**
(21) Anmeldenummer: 10162923.6
(22) Anmeldetag: 17.05.2010
(51) Int. Cl.: F24D 19/00, F24D 19/10, F16K 27/02

(54) **Anschlussteil einer Heizplatte eines Heizkörpers sowie Plattenheizkörper**
Connection component of a heating element of a heater and flat heater
Elément de liaison d'une plaque chauffante d'un corps de chauffe et corps de chauffe à plaques

(30) Priorität: 18.05.2009 DE 202009007149 U
(43) Veröffentlichungstag der Anmeldung: 26.01.2011
(73) Patentinhaber: Caradon Stelrad B.V., 2200 Herantals (BE)
(72) Erfinder: Berthet, Sylvain, 3190 Boortmeerbeek (BE); Grauls, Roger, 3971 Heppen (BE)
(74) Vertreter: Bauer, Dirk

(56) Entgegenhaltungen:
- EP-A2- 1 249 285
- WO-A1-2007/095952
- DE-A1- 4 325 738
- DE-C1- 19 614 330
- FR-A1- 2 533 656

## Beschreibung

### Einleitung

Die Erfindung betrifft ein Anschlussteil einer Heizplatte eines Heizkörpers, wobei das Anschlussteil zwei Verbindungsabschnitte mit jeweils einem endseitigen Öffnungsquerschnitt und einen Ventilabschnitt aufweist, in dessen endseitigen Öffnungsquerschnitt ein Ventil mit seinem Anschlussabschnitt dichtend einsetzbar ist, und weiterhin ein in einem Inneren des Anschlussteils angeordnetes Rohrstück umfasst, das einen Strömungskanal definiert, der in einen Verbindungsabschnitt mündet, wobei eine innere Mantelfläche des Anschlussabschnitts des Ventils eine äußere Mantelfläche des Rohrstücks der eine innere Mantelfläche des Rohrstücks eine äußeren Mantelfläche des Anschlussabschnitts des Ventils dichtend umschließt. Darüber hinaus betrifft die Erfindung einen Plattenheizkörper mit mindestens einer Heizplatte, die aus zwei fluiddicht miteinander verbundenen Halbschalen besteht und mindestens ein mit der Heizplatte verbundenes Anschlussteil aufweist, das zwei Verbindungsabschnitte, deren endseitiger Öffnungsquerschnitte jeweils mit einer in einer der Halbschalen befindlichen Heizmittelanschlussöffnung korrespondieren, und einen Ventilabschnitt aufweist, in dessen endseitigen Öffnungsquerschnitt ein Ventil mit seinem Anschlussabschnitt dichtend einsetzbar ist.

### Stand der Technik

Im Falle von Heizkörpern mit mindestens zwei Heizplatten sind an den Anschlussteilen zwei Verbindungsabschnitte vorhanden, wobei die beiden Verbindungsabschnitte mit ihren Mittelachsen miteinander fluchten und die Mittelachse des Ventilabschnitts im rechten Winkel hierzu angeordnet ist, sodass sich insgesamt die Form eines "T" für das Anschlussteil ergibt. Derartige Anschlussteile existieren sowohl für Heizkörper mit parallel geschalteten als auch mit seriell geschalteten Heizplatten

Aus der DE 196 14 330 C1 ist ein mehrlagiger Plattenheizkörper mit einer integrierten Ventilgarnitur mit Ventileinsatz bekannt, die mit einer Handbetätigung, einem Thermostat oder einem anderen Stellantrieb bestückbar ist. Ein Anschlussabschnitt des Regelventils ist mit einer endseitig angeordneten, nach außen offenen umlaufenden Nut versehen, in die ein O-Ring eingelegt ist. Im eingeschraubten Zustand des Regelventils liegt der O-Ring dichtend in einem schwach konisch ausgebildeten Dichtsitz des Anschlussteils an. Im eingesetzten Zustand des Regelventils ist das Anschlussteil in seinem Ventilabschnitt darüber hinaus mit Hilfe einer zweiten O-Ring-Dichtung abgedichtet, die sich an einem konisch ausgebildeten Ende im Bereich des Öffnungsquerschnitts des Ventilabschnitts des Anschlussteils befindet.

Ein weiteres gattungsgemäßes Anschlussteil ist aus der EP 1 249 285 A1 bekannt, der als nächsliegender Stand der Technik angesehen wird. Auch hier stützt sich eine Stirnseite des Anschlussteils an einer ringförmigen Anlagefläche des Anschlussteils ab. Im Bereich einer Querschnittsverengung des Anschlussabschnitts des Regelventils ist eine O-Ring-Dichtung angeordnet, die sich an einer Dichtfläche des Anschlussteils abstützt.

Weiterhin zeigt die WO 2007/095952 A1 ein Anschlussteil, in das ein Ventil eingesetzt ist. Das Ventil befindet sich in einem Einbauzustand des Anschlussteils in einer Dichtposition, in der korrespondierende Stirnseiten des Ventils und des Anschlussteils sich in einem dichtenden Eingriff miteinander befinden. Außerdem wird mittels eines umlaufenden Dichterings eine seitliche Abdichtung des Ventils gegen das Gehäuse des Anschlussteils erreicht. Der dichtende Eingriff des Ventils mit dem Anschlussteil befähigt das Ventil dazu, einen Fluss eines Fluidstroms von einem Verbindungsabschnitt des Anschlussteils zu dem anderen Anschlussteil steuern zu können.

Ein Anschlussteil der eingangs beschriebenen Art ist ferner aus der französischen Patentanmeldung 2 533 656 bekannt. Dort wird vergleichbar zu dem vorgenannten Dokument eine Dichtung zwischen einem Ventil und dem Anschlussteil mittels eines stirnseitigen Dichtungselements erreicht, dass hier in Form eines O-Rings um einen Anschlussabschnitts des Ventils umläuft.

Bei beiden vorbekannten Anschlussteilen besteht das Problem darin, dass beim Einschrauben des Regelventils sowohl die O-Ring-Dichtung am stirnseitigen Ende des Anschlussabschnitts als auch eine weitere O-Ring-Dichtung im Bereich des endseitigen Öffnungsquerschnitts des Ventilabschnitts gleichzeitig zur Anlage kommen müssen. Es liegt somit eine Art "Doppelpassung" vor, so dass zur Gewährleistung einer hinreichend großen Sicherheit bei der Abdichtung geringe Fertigungstoleranzen eingehalten werden müssen. Diese geringen Fertigungstoleranzen verteuern den Herstellungsprozess der bekannten Anschlussteile bzw. Plattenheizkörper in nicht unerheblicher Weise.

Den vorgenannten Nachteilen gegenüber das weitere Dokument DE 43 25 738 A1 ein Anschlussteil, dessen Ventil unter Verwendung einer radialen Dichtung mit einem Anschlussstück in dichtendem Kontakt steht. Das Anschlussstück bzw. dessen radiale Dichtfläche weist eine gewisse Länge auf, sodass unabhängig von einer exakten in Einschraubposition des Ventils ein zuverlässiger radialer der Kontakt zwischen dem Dichtungselement des Ventils und der Dichtfläche des Anschlussstücks hergestellt werden kann.

Bei dem letztgenannten Anschlussteil haben sich jedoch eine Montage sowie eine Führung eines Fluidstroms durch das Anschlussteil als nachteilig erwiesen.

### Aufgabe

Der Erfindung liegt die Aufgabe zugrunde, ein alternatives Anschlussteil bereitzustellen, bei dem zumindest eine Führung eines Fluidstroms durch das Anschlussteil anders gestaltet ist.

### Lösung

Ausgehend von einem Anschlussteil der eingangs beschriebene Art wird die zugrunde liegende Aufgabe durch ein Einsetzteil gelöst, das in einem endseitigen Öffnungsquerschnitt eines der Verbindungsabschnitte in einem ersten Rohrkörper einschiebbar ist und mit seiner äußeren Mantelfläche mit einer inneren Mantelfläche des jeweiligen Verbindungsabschnitts in dichtendem Kontakt steht, wobei das Einsetzteil mit dem Rohrstück zum Anschluss des Ventils verbunden ist und einen Strömungskanal aufweist, der mit dem Strömungskanal des Rohrstücks korrespondiert und in den jeweiligen Verbindungsabschnitt mündet.

Das erfindungsgemäße Anschlussteil erzielt nicht dadurch eine Dichtwirkung, dass in axiale Richtung des Ventils (z.B. Regelventil oder Entlüftungsventil) bzw. des Ventilabschnitts des Anschlussteils bzw. einer dem Heizkörper allein zugeordnete Umwälzpumpe (dann anstelle eines Ventils), eine hinreichend große Dichtkraft aufgebaut, d.h. Komprimierung eines Elastomerdichtrings bewirkt wird, sondern dass ein elastomeres Dichtungselement in radiale Richtung komprimiert wird, wobei die axiale Position des Dichtungselements unerheblich ist. Ein zwischen der inneren Mantelfläche des Rohrstücks und einer äußeren Mantelfläche des Anschlussabschnitts des Ventils befindlicher Dichtring oder ein zwischen einer inneren Mantelfläche des Anschlussabschnitts des Regelventils und einer äußeren Mantelfläche des Rohrstücks befindlicher Dichtring kann somit in axiale Richtung des Ventilanschnitts beliebig verschoben werden, ohne dass die Dichtwirkung hierdurch beeinflusst wird.

Im Ergebnis bedeutet dies, dass das Ventil soweit axial in den Ventilanschnitt des Anschlussteils eingeschraubt wird, bis eine durch den Aufbau eines axialen Drucks hinreichend große Abdichtung zwischen dem Ventil und einem stirnseitigen Ende des Ventilabschnitts des Anschlussteils erreicht wird. An dem gegenüber liegenden Ende des Ventils wird die Abdichtung bereits zu einem wesentlich früheren Zeitpunkt erreicht, nämlich dann, wenn der Anschlussabschnitt des Ventils und das erfindungsgemäße Rohrstück einander überlappen, so dass aufgrund des radial zwischengeschalteten Dichtungselements eine in axiale Richtung gleitende Abdichtung erzielt wird. Wesentlich für die Funktionalität des erfindungsgemäßen Anschlussteils ist es, dass das Heizmittel von einem Verbindungsabschnitt in den jeweils anderen nur über das Rohrstück und das Ventil (bzw. die Pumpe) in geöffneter (bzw. Betriebs-) Stellung gelangen kann, d.h. dass ansonsten keine Strömungsverbindung zwischen den Verbindungsabschnitten besteht.

Durch Wirkung des erfindungsgemäßen Einsetzteils lässt sich die gewünschte Strömung in dem Anschlussteil auf einfache Weise realisieren.

Gemäß einer Weiterbildung der Erfindung ist vorgesehen, dass eine Mittelachse des Rohrstücks mit einer Mittelachse der Verbindungsabschnitte einen Winkel von 90° einschließt. Diese Ausgestaltung erlaubt eine Anordnung der Mittelachse des Ventils parallel zu der Ebene der Heizplatte.

Eine T-Form des Anschlussteils wird erhalten, wenn die Mittelachsen der zwei Verbindungsabschnitte miteinander fluchten und die Mittelachse des Rohrstücks senkrecht zu den vorgenannten Mittelachsen verläuft und alle drei vorgenannten Mittelachsen innerhalb einer gemeinsamen Ebene verlaufen und die Mittelachse des Rohrstücks mittig zwischen den Öffnungsquerschnitten der gegenüber liegenden Verbindungsabschnitte angeordnet ist.

Eine bevorzugte Weiterbildung der Erfindung besteht darin, dass die zwei Verbindungsabschnitte von einem ersten, in einem Mittelbereich gestauchten Rohrkörper und der Ventilabschnitt von einem zweiten, mit dem ersten Rohrkörper verbundenen, vorzugsweise verschweißten Rohrkörper gebildet sind bzw. wobei der erste Rohrkörper einen Überströmquerschnitt aufweist, der mit einem Querschnitt des Ventilabschnitts korrespondiert.

Der in einem Mittelbereich gestauchte erste Rohrkörper erlaubt eine einfache Strömungsführung von einem Verbindungsabschnitt durch einen Drosselquerschnitt des Regelventils zu dem zweiten Verbindungsquerschnitt.

Die Erfindung weiter ausgestaltend wird vorgeschlagen, dass sich das Rohrstück mit einem freien Ende innerhalb oder außerhalb eines Zylinders befindet, der durch Parallelverschiebung des Öffnungsquerschnitts des mindestens einen Verbindungsabschnitts entlang einer Mittelachse des mindestens einen Verbindungsabschnitts entsteht. Bei erstgenannter Alternative, bei der sich das Rohrstück mit seinem freien Ende innerhalb eines wie vorstehend definierten Zylinders befindet, lässt sich das Rohrstück zusammen mit dem Einsetzteil in den endseitigen Öffnungsquerschnitt des Verbindungsabschnitts einführen und montieren. Dies ist bei der zweiten Alternative nicht der Fall, so dass das Rohrstück in diesem Fall erst nach der Montage des Einsetzteils durch den Öffnungsquerschnitt des Ventilabschnitts hindurch in das Anschlussteil eingeführt und dort mit dem Einsetzteil verbunden werden muss.

Darüber hinaus ist erfindungsgemäß noch vorgesehen, dass das Einsetzstück einen Absatz aufweist, der einen Verschlussabschnitt des Einsetzstücks von einem Durchlassabschnitt des Einsatzstücks trennt, wobei der Durchlassabschnitt mit einer Abflachung versehen ist, an der das Rohrstück angeschlossen ist. Hierdurch wird beim Fügen von Einsatzstück und Rohrstück eine genau definierte Montageposition vorgegeben, so dass bei der Fertigung besonders geringe Toleranzen eingehalten werden können.

Die Erfindung wird nachfolgend anhand eines Ausführungsbeispiels eines Anschlussteils, das in der Zeichnung dargestellt ist, näher erläutert.

Es zeigt:
- Fig. 1:: einen Schnitt durch ein T-förmiges Anschlussteil,
- Fig. 2:: eine erste Seitenansicht des Anschlussteils nach Fig. 1,
- Fig. 3:: eine zweite Seitenansicht des Anschlussteils nach Fig. 1,
- Fig. 4:: eine vergrößerte Darstellung des Anschlussteils gemäß Figur 1 im Bereich eines mit einem Rohrstück versehenen Einsetzteils und
- Fig. 5:: wie Figur 1, jedoch mit dem eingesetzten Regelventil und zwei Heizplatten.

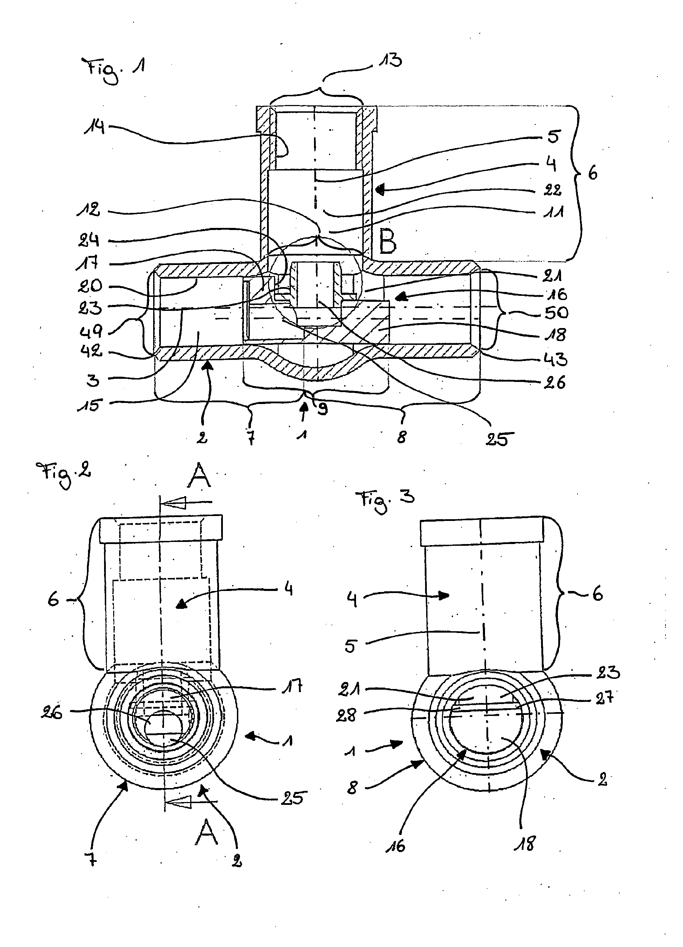

Ein in den Figuren 1 bis 3 dargestelltes Anschlussteil 1 weist einen ersten Rohrkörper 2 mit einer ersten Mittelachse 3 und einen zweiten Rohrkörper 4 mit einer senkrecht zu der ersten Mittelachse 3 ausgerichteten zweiten Mittelachse 5 auf. Der zweiten Rohrkörper 4 bildet einen Ventilabschnitt 6, wohingegen der erste Rohrkörper 2 auf einer Seite einen ersten Verbindungsabschnitt 7 und auf der anderen Seite daran angrenzend einen zweiten Verbindungsabschnitt 8 bildet.

Der erste Rohrkörper 2 ist aus einem zylindrischen Rohrabschnitt hergestellt, wobei durch einen Stauchvorgang in einem Mittelbereich 9 umlaufend eine Auswölbung 10 hergestellt ist. In dem Mittelbereich 9 weist der erste Rohrkörper 2 eine im Wesentlichen kreisförmige Öffnung auf, die einen Überströmquerschnitt 11 definiert. Der Überströmquerschnitt 11 korrespondiert mit einem Querschnitt 12 des Ventilabschnitts 6.

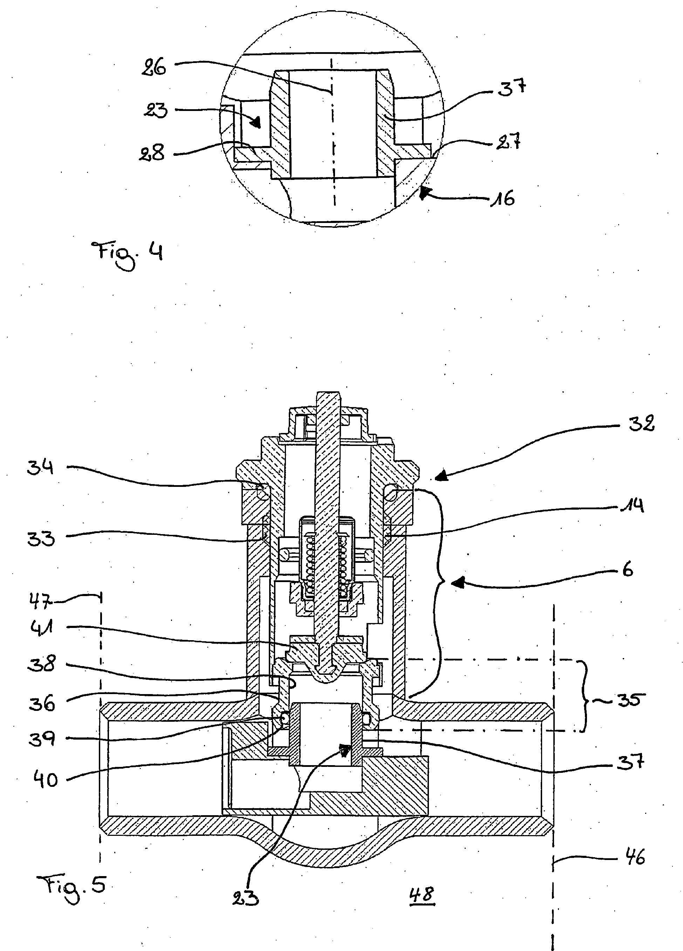

Der Ventilabschnitt 6 weist an seinem gegenüber liegenden Ende einen Öffnungsquerschnitt 13 auf, in den - wie in Figur 5 dargestellt ist, ein Regelventil einsetzbar ist, das mit seinem Außengewindeabschnitt in einen Innengewindeabschnitt 14 des den Ventilabschnitt 6 bildenden zweiten Rohrkörpers 4 einschraubbar ist.

In einem Inneren 15 des ersten Rohrkörpers befindet sich ein Einsetzteil 16, das aus einem Verschlussabschnitt 17 und einem Durchlassabschnitt 18 besteht. Der Verschlussabschnitt 17 befindet sich innerhalb des ersten Verbindungsabschnitts und liegt mit seiner Mantelfläche 19 umlaufend dichtend an einer inneren Mantelfläche 20 des ersten Rohrkörpers an. Hingegen liegt das Einsetzteil 16 im Bereich des zweiten Verbindungsabschnitts mit seinem Durchlassabschnitt 18 etwas mehr als über den halben Umfang an der inneren Mantelfläche 20 des ersten Rohrkörpers 2 an (Figur 3).

Oberhalb des Durchlassabschnitts 18 befindet sich ein Strömungskanal 21, der eine Verbindung von dem Inneren 15 des ersten Rohrkörpers 2 zu einem Inneren 22 des Ventilabschnitts 6 bildet. In dem Strömungskanal 21 befindet sich ein Rohrstück 23, das im Bereich des Durchlassabschnitts 18 angrenzend an einen letzteren von dem Verschlussabschnitt 17 trennenden Absatz 24. Das Innere des Rohrstücks 23 bildet zusammen mit einem Kanalabschnitt 25 einen Strömungskanal 26, der eine Verbindung zwischen dem Inneren 15 des ersten Rohrkörpers 2 und dem Inneren 22 des zweiten Rohrkörpers 4, d.h. des Ventilabschnitts 6, bildet und eine rechtwinklige Gestalt aufweist. Der Kanalabschnitt 25 des Strömungskanals 26 ist zusammen mit dem Verschlussabschnitt 17 des Einsetzteils 16, in dem er sich befindet, insbesondere auch in Figur 2 zu erkennen.

Figur 4 veranschaulicht, wie das Rohrstück 23 im Bereich einer Fläche 27 des Durchlassabschnitts 18 des Einsetzteils 16 mit letzterem verbunden, insbesondere verschweißt, ist. Alternativ ist auch eine dichtende Presspassung möglich. Das Rohrstück 23 liegt mit einem vorstehenden Flansch 28 an der Fläche 27 an das Rohrende 29 in eine Bohrung des Einsatzteils 16 dichtend ein. Das gegenüber liegende längere freie Rohr-ende 30 dient mit seinem Abschnitt 31 zur Aufnahme des umgreifenden Anschlussabschnitts des Regelventils, wie in Figur 5 beschrieben wird.

Figur 5 veranschaulicht, wie in den Ventilabschnitt 6 des Anschlussteils 1 ein Regelventil 32 mit dessen Außengewindeabschnitt 33 in den Innengewindeabschnitt 14 des Ventilabschnitts 6 eingeschraubt ist. Aufbau und Funktionsweise des thermostatischen Regelungsprinzips des Regelventils 32 sind bekannt, so dass hierauf nicht näher eingegangen werden muss. Wie üblich erfolgt die Abdichtung des Regelventils 32 gegenüber dem Ventilabschnitt 6 mit Hilfe eines O-Rings 34.

An einem dem Inneren des Anschlussteils 1 zugewandten freien Ende des Regelventils 32 besitzt dieses einen Anschlussabschnitt 35, mit dem ein dichter Anschluss an das Rohrstück 23 des Anschlussteils 1 hergestellt wird. Der Anschlussabschnitt 35 ist in Form eines Hülsenkörpers 36 ausgebildet, der eine äußere Mantelfläche 37 des Rohrstücks 23 mit seiner inneren Mantelfläche 38 dichtend umgreift. In einer Nut 39 in dem Hülsenkörper 36 befindet sich ein O-Ring 40 um eine zuverlässige Abdichtung im Bereich des Anschlussabschnitts 35 unabhängig von der axialen Position von Rohrstück 23 und Anschlussabschnitt 35 zueinander zu gewährleisten. Je nach der axialen Stellung eines Ventiltellers 41 wird ein unterschiedlich großer Öffnungsquerschnitt zwischen dem Ventilteller 41 und einem oberen Öffnungsquerschnitt des Anschlussabschnitts freigegeben, so dass das Heizmittel von dem einen Verbindungsabschnitt 7 über den Strömungskanal 26 in dem Einsatzteil 16 und anschließend das Regelventil 32 in den anderen Verbindungsabschnitt 8 strömen kann. Ebenso ist eine Durchströmung des Regelventils 32 bzw. des Einsatzteils 16 in die entgegengesetzte Richtung möglich. Das Einsatzteil 16 verhindert durch seine im Bereich des Verschlussabschnitts 17 fluiddichte Anbindung an den Verbindungsanschnitt 7 eine direkte Strömung von einem Verbindungsabschnitt 7 oder 8 zu dem anderen Verbindungsabschnitt 8 oder 7.

Figur 5 verdeutlicht schließlich noch, dass das Anschlussteil 1 an seinen gegenüber liegenden Stirnseiten 42 und 43 jeweils mit einer Halbschale 44, 45 einer Heizplatte 46, 47 eines nur ausschnittsweise dargestellten Plattenheizkörpers 48 in der üblichen Weise durch Widerstandsschweißung verbunden ist. Dabei korrespondieren die den gegenüber liegenden Stirnseiten 42, 43 zugeordneten Öffnungsquerschnitte 49, 50 der Verbindungsabschnitte 7, 8 mit Heizmittelanschlussöffnungen 51, 52 in den Halbschalen 44, 45 der Heizplatte 46, 47. Das erfindungsgemäße Anschlussteil 1 ist insbesondere zur Verwendung bei einem so genannten "seriellen Heizkörper" vorgesehen, bei dem eine vordere Heizplatte 45 als erstes durchströmt wird und eine hintere Heizplatte 47 erst anschließend durchströmt wird, wobei die Durchflussmenge von dem in dem Anschlussteil 1 angeordneten Regelventil 32 beispielsweise thermostatisch geregelt wird. Das Anschlussteil 1 kann alternativ anstelle mit einem Regelventil auch mit einem Entlüftungsventil ausgestattet werden.

### Bezugszeichenliste

- 1: Anschlussteil
- 2: erster Rohrkörper
- 3: erste Mittelachse
- 4: zweiter Rohrkörper
- 5: zweite Mittelachse
- 6: Ventilabschnitt
- 7: erster Verbindungsabschnitt
- 8: zweiter Verbindungsabschnitt
- 9: Mittelbereich
- 10: Auswölbung
- 11: Überströmquerschnitt
- 12: Querschnitt
- 13: Öffnungsquerschnitt
- 14: Innengewindeabschnitt
- 15: Inneres
- 16: Einsetzteil
- 17: Verschlussabschnitt
- 18: Durchlassabschnitt
- 19: äußere Mantelfläche
- 20: innere Mantelfläche
- 21: Strömungskanal
- 22: Inneres
- 23: Rohrstück
- 24: Absatz
- 25: Kanalabschnitt
- 26: Strömungskanal
- 27: Fläche
- 28: Flansch
- 29: freies Rohrende
- 30: freies Rohrende
- 31: Abschnitt
- 32: Ventil
- 33: Außengewindeabschnitt
- 34: O-Ring
- 35: Anschlussabschnitt
- 36: Hülsenkörper
- 37: äußere Mantelfläche
- 38: innere Mantelfläche
- 39: Nut
- 40: O-Ring
- 41: Ventilteller
- 42: Stirnseite
- 43: Stirnseite
- 44: Halbschale
- 45: Halbschale
- 46: Heizplatte
- 47: Heizplatte
- 48: Plattenheizkörper
- 49: Öffnungsquerschnitt
- 50: Öffnungsquerschnitt
- 51: Heizmittelanschlussöffnung
- 52: Heizmittelanshlussöffnung

## Patentansprüche

1. Anschlussteil (1) einer Heizplatte (46, 47) eines Heizkörpers, wobei das Anschlussteil (1) zwei Verbindungsabschnitte (7, 8) mit jeweils einem endseitigen Öffnungsquerschnitt (49, 50) und einen Ventilabschnitt (6) aufweist, in dessen endseitigen Öffnungsquerschnitt (13) ein Ventil (32) mit seinem Anschlussabschnitt (35) dichtend einsetzbar ist, und weiterhin ein in einem Inneren (15, 22) des Anschlussteils (1) angeordnetes Rohrstück (23) umfasst, das einen Strömungskanal (25) definiert, der in einen Verbindungsabschnitt (7) mündet, wobei eine innere Mantelfläche (38) des Anschlussabschnitts (35) des Ventils (32) eine äußere Mantelfläche (37) des Rohrstücks (23) oder eine innere Mantelfläche des Rohrstücks (23) eine äußeren Mantelfläche (36) des Anschlussabschnitts (35) des Ventils (32) dichtend umschließt, **gekennzeichnet durch** ein Einsetzteil (16), das in einem endseitigen Öffnungsquerschnitt (49, 50) eines der Verbindungsabschnitte (7, 8) in einem ersten Rohrkörper (2) einschiebbar ist und mit seiner äußeren Mantelfläche (19) mit einer inneren Mantelfläche (20) des jeweiligen Verbindungsabschnitts (7, 8) in dichtendem Kontakt steht, wobei das Einsetzteil (16) mit dem Rohrstück (23) zum Anschluss des Ventils (32) verbunden ist und einen Strömungskanal (26) aufweist, der mit dem Strömungskanal (25) des Rohrstücks (23) korrespondiert und in den jeweiligen Verbindungsabschnitt (7, 8) mündet.

2. Anschlussteil nach Anspruch 1, **dadurch gekennzeichnet, dass** eine Mittelachse (5) des Rohrstücks (23) mit einer Mittelachse (3) eines der Verbindungsabschnitte (7, 8) einen Winkel von 90° einschließt.

3. Anschlussteil nach Anspruch 1 oder 2, **dadurch gekennzeichnet, dass** die Mittelachsen (3) der zwei Verbindungsabschnitte (7, 8) miteinander fluchten und die Mittelachse (5) des Rohrstücks (23) senkrecht zu den vorgenannten Mittelachsen (3) verläuft und dass alle drei vorgenannten Mittelachsen (3, 5) innerhalb einer gemeinsamen Ebene verlaufen, wobei die Mittelachse (5) des Rohrstücks (23) mittig zwischen den Öffnungsquerschnitten (49, 50) der sich gegenüber liegenden Verbindungsabschnitte (7, 8) angeordnet ist.

4. Anschlussteil nach einem der Ansprüche 1 bis 3, **dadurch gekennzeichnet, dass** die zwei Verbindungsabschnitte (7, 8) von einem ersten, in einem Mittelbereich (9) gestauchten Rohrkörper (2) und der Ventilabschnitt (6) von einem zweiten, mit dem ersten Rohrkörper (2) verschweißten Rohrkörper (4) gebildet sind bzw. ist, wobei der erste Rohrkörper (2) einen Überströmquerschnitt (11) aufweist, der mit einem Querschnitt (12) des Ventilabschnitts (6) korrespondiert.

5. Anschlussteil nach einem der Ansprüche 1 bis 4, **dadurch gekennzeichnet, dass** das Rohrstück (23) sich mit einem freien Ende innerhalb oder außerhalb eines Zylinders befindet, der durch eine Parallelverschiebung des Öffnungsquerschnitts (49, 50) des mindestens einen Verbindungsabschnitts (7, 8) entlang dessen Mittelachse (3) entsteht.

6. Anschlussteil nach Anspruch 5, **dadurch gekennzeichnet, dass** das Einsetzteil (16) einen Absatz (24) aufweist, der einen Verschlussabschnitt (17) des Einsetzteils (16) von einem Durchlassabschnitt (18) des Einsetzteils (16) trennt, wobei der Durchlassabschnitt (18) mit einer Abflachung (27) versehen ist, an der das Rohrstück (23) angeschlossen ist.

7. Plattenheizkörper (48) mit mindestens einer Heizplatte (46, 47), die aus zwei fluiddicht miteinander verbundenen Halbschalen (44, 45) besteht und mindestens ein mit der Heizplatte (46, 47) verbundenes Anschlussteil (1) nach Anspruch 1 aufweist, das zwei Verbindungsabschnitte (7, 8), deren Öffnungsquerschnitte (49, 50) jeweils mit einer in einer der Halbschalen (44, 45) befindlichen Heizmittelanschlussöffnung (51, 52) korrespondieren und einen Ventilabschnitt (6) aufweist, in dessen endseitigen Öffnungsquerschnitt (13) ein Ventil (32) mit seinem Anschlussabschnitt (35) dichtend einsetzbar ist, und weiterhin ein in einem Inneren (15, 22) des Anschlussteils (1) angeordnetes Rohrstück (23), das einen Strömungskanal (26) definiert, der in einen Verbindungsabschnitt (7) mündet, wobei eine innere Mantelfläche (38) des Anschlussabschnitts (35) des Ventils (32) eine äußere Mantelfläche (37) des Rohrstücks (23) oder eine innere Mantelfläche des Rohrstücks eine äußere Mantelfläche des Anschlussabschnitts des Ventils dichtend umschließt, **gekennzeichnet durch** ein Einsetzteil (16), das in einem endseitigen Öffnungsquerschnitt (49, 50) eines der Verbindungsabschnitte (7, 8) in einem ersten Rohrkörper (2) angeordnet ist und mit seiner äußeren Mantelfläche (19) mit einer inneren Mantelfläche (20) des jeweiligen Verbindungsabschnitts (7, 8) in dichtendem Kontakt steht, wobei das Einsetzteil (16) mit dem Rohrstück (23) zum Anschluss des Ventils (32) verbunden ist und einen Strömungskanal (26) aufweist, der mit dem Strömungskanal (25) des Rohrstücks (23) korrespondiert und in den jeweiligen Verbindungsabschnitt (7, 8) mündet.

## Claims

1. A connection piece (1) of a heating plate (46, 47) of a radiator, wherein the connection piece (1) has two connecting sections (7, 8) with an end-side opening cross section (49, 50) and a valve section (6) in each case, in the end-side opening cross section (13) of which a valve (32) can be inserted in a sealing manner using the connecting section (35) thereof, and furthermore comprises a pipe section (23) arranged in an interior (15, 22) of the connection piece (1), which defines a flow channel (25), which opens into a connecting section (7), wherein an inner enveloping surface (38) of the connecting section (35) of the valve (32) surrounds an outer enveloping surface (37) of the pipe section (23) in a sealing manner or an inner enveloping surface of the pipe section (23) surrounds an outer enveloping surface (36) of the connecting section (35) of the valve (32) in a sealing manner, **characterised by** an insert part (16), which can be pushed into an end-side opening cross section (49, 50) of one of the connecting sections (7, 8) in a first pipe body (2) and, by means of the outer enveloping surface (19) thereof, is in sealing contact with an inner enveloping surface (20) of the respective connecting section (7, 8), wherein the insert part (16) is connected to the pipe section (23) for connecting the valve (32) and has a flow channel (26), which corresponds to the flow channel (25) of the pipe section (23) and opens into the respective connecting section (7, 8).

2. The connection piece according to Claim 1, **characterised in that** a central axis (5) of the pipe section (23) encloses an angle of 90° with a central axis (3) of one of the connecting sections (7, 8).

3. The connection piece according to Claim 1 or 2, **characterised in that** the central axes (3) of the two connecting sections (7, 8) are flush with one another and the central axis (5) of the pipe section (23) runs perpendicularly to the previously mentioned central axes (3) and **in that** all three previously mentioned central axes (3, 5) run within a common plane, wherein the central axis (5) of the pipe section (23) is arranged centrally between the opening cross sections (49, 50) of the mutually opposite connecting sections (7, 8).

4. The connection piece according to one of Claims 1 to 3, **characterised in that** the two connecting sections (7, 8) are formed by a first pipe body (2) buckled in a central region (9) and the valve section (6) is formed by a second pipe body (4) welded to the first pipe body (2), wherein the first pipe body (2) has an overflow cross section (11), which corresponds to a cross section (12) of the valve section (6).

5. The connection piece according to one of Claims 1 to 4, **characterised in that** a free end of the pipe section (23) is located within or outside a cylinder, which arises due to a parallel displacement of the opening cross section (49, 50) of the at least one connecting section (7, 8) along the central axis (3) thereof.

6. The connection piece according to Claim 5, **characterised in that** the insert part (16) has a step (24), which separates a closure section (17) of the insert part (16) from a passage section (18) of the insert part (16), wherein the passage section (18) is provided with a flat section (27), to which the pipe section (23) is connected.

7. A plate radiator (48) with at least one heating plate (46, 47), which consists of two half shells (44, 45), which are connected to one another in a fluid-tight manner, and has at least one connection piece (1) according to Claim 1 connected to the heating plate (46, 47), which connection piece has two connecting sections (7, 8), the opening cross sections (49, 50) of which in each case correspond to a heating agent connection opening (51, 52) located in one of the half shells (44, 45), and has a valve section (6), in the end-side opening cross section (13) of which a valve (32) can be inserted in a sealing manner using the connecting section (35) thereof, and furthermore comprises a pipe section (23) arranged in an interior (15, 22) of the connection piece (1), which defines a flow channel (26), which opens into a connecting section (7), wherein an inner enveloping surface (38) of the connecting section (35) of the valve (32) surrounds an outer enveloping surface (37) of the pipe section (23) in a sealing manner or an inner enveloping surface of the pipe section surrounds an outer enveloping surface of the connecting section of the valve in a sealing manner, **characterised by** an insert part (16), which is arranged in an end-side opening cross section (49, 50) of one of the connecting sections (7, 8) in a first pipe body (2) and, by means of the outer enveloping surface (19) thereof, is in sealing contact with an inner enveloping surface (20) of the respective connecting section (7, 8), wherein the insert part (16) is connected to the pipe section (23) for connecting the valve (32) and has a flow channel (26), which corresponds to the flow channel (25) of the pipe section (23) and opens into the respective connecting section (7, 8).

## Revendications

1. Pièce de raccord (1) d'une plaque chauffante (46,47) d'un radiateur, la pièce de raccord (1) comportant deux sections de raccordement (7,8) avec respectivement une section d'ouverture (49,50) en extrémité et une partie de soupape (6), section d'ouverture en extrémité (13) dans laquelle une soupape (32) peut être introduite de façon étanche avec sa section de raccord (35) et comprenant en plus une pièce tubulaire (23) disposée dans un intérieur (15,22) de la pièce de raccord (1), qui définit un conduit d'écoulement (25), qui débouche dans une section de raccordement (7), pour laquelle pour une surface d'enveloppe intérieure (38) de la section de raccord (35) de la soupape (32), une surface d'enveloppe extérieure (37) de la pièce tubulaire (23) ou une surface d'enveloppe intérieure de la pièce tubulaire (23) entoure de façon étanche une surface d'enveloppe extérieure (36) de la section de raccord (35) de la soupape (32) **caractérisée par** une pièce insérable (16) qui peut être introduite dans une section d'ouverture en extrémité (49,50) d'une des sections de raccordement (7,8) dans un premier corps tubulaire (2) et est avec sa surface d'enveloppe extérieure (19) en contact étanche avec une surface d'enveloppe intérieure (20) de la section de raccordement (7,8) correspondante, pour laquelle la pièce insérable (16) est reliée avec la pièce tubulaire (23) pour raccordement de la soupape (32) et comporte un conduit d'écoulement (26) qui correspond avec le conduit d'écoulement (25) de la pièce tubulaire (23) et débouche dans la section de raccordement (7,8) correspondante.

2. Pièce de raccord selon la revendication 1 **caractérisée en ce qu'**un axe médian (5) de la pièce tubulaire (23) constitue un angle de 90° avec un axe médian (3) d'une des sections de raccordement (7,8).

3. Pièce de raccord selon la revendication 1 ou 2 **caractérisée en ce que** les axes médians (3) des deux sections de raccordement (7,8) sont alignés l'un par rapport à l'autre et l'axe médian (5) de la pièce tubulaire (23) passe perpendiculairement aux axes médians (3) précités et **en ce que** les trois axes médians précités (3,5) passent à l'intérieur d'un plan commun, l'axe médian (5) de la pièce tubulaire (23) étant disposé au centre entre les sections d'ouverture (49,50) des sections de raccordement (7,8) s'opposant.

4. Pièce de raccord selon l'une quelconque des revendications 1 à 3 **caractérisée en ce que** les deux sections de raccordement (7,8) sont formées par un premier corps tubulaire (2) refoulé dans une zone centrale (9) et la partie de soupape (6) est formée par un deuxième corps tubulaire (4) soudé au premier corps tubulaire (2), le premier corps tubulaire (2) comportant une section de trop-plein (11), qui correspond avec une section transversale (12) de la partie de soupape (6).

5. Pièce de raccord selon l'une quelconque des revendications 1 à 4 **caractérisée en ce que** la pièce tubulaire (23) se trouve avec une extrémité libre à l'intérieur ou à l'extérieur d'un cylindre qui apparaît par un déplacement parallèle de la section d'ouverture (49,50) d'au moins une section de raccordement (7,8) le long de son axe médian (3).

6. Pièce de raccord selon la revendication 5 **caractérisée en ce que** la pièce insérable (16) comporte un retrait (24) qui sépare une section de fermeture (17) de la pièce insérable (16) de la section de passage (18) de la pièce insérable (16), la section de passage (18) étant dotée d'un méplat (27) auquel est raccordée la pièce tubulaire (23).

7. Radiateur à plaques (48) avec au moins une plaque chauffante (46,47) qui est composée de deux demi-coques (44,45) reliées l'une à l'autre de manière étanche au fluide et comporte au moins une pièce de raccord (1) reliée à la plaque chauffante (46,47) selon la revendication 1, qui comporte deux sections de raccordement (7,8), dont les sections d'ouverture (49,50) correspondent respectivement à une ouverture de raccord de milieu chauffant (51,52) se trouvant dans une des demi-coques (44,45) et comporte une partie de soupape (6) dans la section d'ouverture (13) en extrémité de laquelle une soupape (32) peut être insérée de manière étanche avec sa section de raccord (35) et de plus une pièce tubulaire (23) disposée dans un intérieur (15,22) de la pièce de raccord (1) qui définit un conduit d'écoulement (26), qui débouche dans une section de raccordement (7), pour lequel une surface d'enveloppe intérieure (38) de la section de raccord (35) de la soupape (32) entoure de manière étanche une surface d'enveloppe (37) extérieure de la pièce tubulaire (23) ou une surface d'enveloppe intérieure de la pièce tubulaire entoure de manière étanche une surface d'enveloppe extérieure de la section de raccordement de la soupape, **caractérisée en ce qu'**une pièce insérable (16), qui est disposée dans une section d'ouverture (49,50) en extrémité d'une des sections de raccordement (7,8) dans un premier corps tubulaire (2) et est, avec sa surface d'enveloppe extérieure (19), en contact de manière étanche avec une surface d'enveloppe (20) intérieure de la section de raccordement (7,8) correspondante, pour lequel la pièce insérable (16) est reliée avec la pièce tubulaire (23) pour raccordement de la soupape (32) et comporte un conduit d'écoulement (26), qui correspond au conduit d'écoulement (25) de la pièce tubulaire (23) et débouche dans la section de raccordement (7,8) correspondante.
